# EUROPÄISCHE PATENTANMELDUNG

(11) **EP 4 383 549 A1**
(43) Veröffentlichungstag der Anmeldung: **12.06.2024**
(21) Anmeldenummer: 22211404.3
(22) Anmeldetag: 05.12.2022
(51) Int. Cl.: H02M 7/483, H02M 1/00, H02M 3/00, H02J 3/36

(54) **MODULARER GLEICHSPANNUNGSWANDLER**

(71) Anmelder: Siemens Aktiengesellschaft, 80333 München (DE)
(72) Erfinder: Hofmann, Viktor, 95448 Bayreuth (DE); Hofstetter, Patrick, 91056 Erlangen (DE)
(74) Vertreter: Siemens Patent Attorneys

(57) **Zusammenfassung**

Die Erfindung betrifft einen modularen Gleichspannungswandler (1) aufweisend eine erste Gleichspannungsseite (2) mit zwei ersten Gleichspannungsanschlüssen (21,22), eine zweite Gleichspannungsseite (3) mit zwei zweiten Gleichspannungsanschlüssen (31,32), einen ersten Modularm (4) mit zwei ersten Modularmanschlüssen (7) und einen zweiten Modularm (5) mit zwei zweiten Modularmanschlüssen (8). Dabei sind zwischen den zwei ersten Gleichspannungsanschlüssen (21,22) der erste Modularm (4) und eine erste Induktivität (23) in Reihe angeordnet, wobei zwischen den zwei zweiten Gleichspannungsanschlüssen (31,32) der zweite Modularm (5) und eine zweite Induktivität (33) in Reihe angeordnet sind, wobei der erste Modularm (4), der zweite Modularm (5) und ein Maschenkondensator (61) derart in Reihe angeordnet sind, dass sich eine Masche (6) bildet, wobei die Modularme (4,5) eingerichtet sind, jeweils eine Spannung (u_{M1}, u_{M2}) zu erzeugen, die einen Gleichspannungsanteil und einen Wechselspannungsanteil mit einer ersten Frequenz (f₁) aufweist. Die Erfindung betrifft ferner ein Gleichspannungsnetz (10) mit einem derartigen Gleichspannungswandler (1). Weiter betrifft die Erfindung ein Verfahren zum Betreiben eines derartigen modularen Gleichspannungswandlers (1) oder eines derartigen Gleichspannungsnetzes (10).

## Beschreibung

Die Erfindung betrifft einen modularen Gleichspannungswandler aufweisend eine erste Gleichspannungsseite mit zwei ersten Gleichspannungsanschlüssen und eine zweite Gleichspannungsseite mit zwei zweiten Gleichspannungsanschlüssen. Ferner betrifft die Erfindung ein Gleichspannungsnetz mit einem derartigen modularen Gleichspannungswandler und einer Gleichspannungsquelle. Weiter betrifft die Erfindung ein Verfahren zum Betreiben eines derartigen modularen Gleichspannungswandlers oder eines derartigen Gleichspannungsnetzes.

Ein Gleichspannungswandler dient zum Umwandeln einer an den zwei ersten Gleichspannungsanschlüssen einer ersten Gleichspannungsseite anliegenden ersten Gleichspannung in eine an den zwei zweiten Gleichspannungsanschlüssen einer zweiten Gleichspannungsseite anliegenden zweiten Gleichspannung. Dabei wird elektrische Energie zwischen der ersten und der zweiten Gleichspannungsseite übertragen.

Gleichspannungswandler erlauben es, Gleichspannungsnetze mit unterschiedlicher Spannung miteinander zu verbinden. Ebenso ermöglicht es der Gleichspannungswandler, einen oder mehrere Verbraucher mit einem Gleichspannungsnetz zu verbinden, wobei Verbraucher und Gleichspannungsnetz unterschiedliche Betriebsspannungen aufweisen.

Ein Gleichspannungswandler wird auch als Gleichstromsteller, DC/DC Wandler, DC/DC Konverter oder DC/DC Chopper bezeichnet.

Gleichspannungsnetze gewinnen in der heutigen Zeit vor dem Hintergrund der aktuellen Technologielandschaft zunehmend an Bedeutung. Sie werden bei der hocheffizienten Übertragung großer Energiemengen eingesetzt oder dienen als Sammelnetze für Photovoltaik- oder Windenergieanlagen. Ebenso kommen sie, unter anderem auch aufgrund der vorangetriebenen Dekarbonisierung, immer häufiger als Schiffsnetze oder in der automobilen Ladeinfrastruktur zum Einsatz. Die Vorteile liegen hierbei beispielsweise in der erhöhten Effizienz und Energiedichte, einer möglichen Reduktion von Schaltanlagen und passiven Leistungskomponenten sowie einer leichteren Integration von Batterien oder Brennstoffzellen. Eine wichtige Schlüsseltechnologie zur Realisierung solcher Netze bilden die Gleichspannungswandler. Diese Geräte zur Anpassung unterschiedlicher Gleichspannungen ermöglichen die Netzanbindung von Betriebsmitteln und erlauben einen Energieaustausch zwischen Netzen unterschiedlicher Spannungsebenen.

Üblicherweise wird bei einem DC/DC Steller die Gleichspannung in eine Wechselspannung gewandelt. Mit Hilfe eines Transformators wird das Spannungsniveau angepasst und anschließend die Wechselspannung mittels eines Gleichrichters wieder in eine Gleichspannung gewandelt. Je nach Art der Umwandlung in Wechselspannung und Gleichspannung kann der Gleichspannungswandler Energie in nur eine Richtung oder in beide Richtungen übertragen.

Im Folgenden wird der Begriff "in Reihe angeordnet" verwendet, wenn die einzelnen Spannungen der in Reihe angeordneten Komponenten sich addieren und die Summe dieser einzelnen Spannungen als Gesamtspannung über diesen Elementen anliegt. Dazu müssen diese Elemente nicht notwendigerweise vom gleichen Strom durchflossen werden. Zwischen den Elementen kann eine Verzweigung für den Strom angeordnet sein. Bei einer Reihenschaltung werden die in einer Reihenschaltung angeordneten Komponenten auch vom gleichen Strom durchflossen.

Eine Masche bezeichnet in der Elektrotechnik einen über elektrische Komponenten oder allgemein über Zweige geschlossenen Umlauf. Die Summe der Spannungen über alle Komponenten oder Zweige einer Masche ist immer gleich null.

Der Erfindung liegt die Aufgabe zugrunde, einen modularen Gleichspannungswandler zu verbessern.

Diese Aufgabe wird durch einen modularen Gleichspannungswandler aufweisend eine erste Gleichspannungsseite mit zwei ersten Gleichspannungsanschlüssen, eine zweite Gleichspannungsseite mit zwei zweiten Gleichspannungsanschlüssen, einen ersten Modularm mit zwei ersten Modularmanschlüssen und einen zweiten Modularm mit zwei zweiten Modularmanschlüssen gelöst, wobei zwischen den zwei ersten Gleichspannungsanschlüssen der erste Modularm und eine erste Induktivität in Reihe angeordnet sind, wobei zwischen den zwei zweiten Gleichspannungsanschlüssen der zweite Modularm und eine zweite Induktivität in Reihe angeordnet sind, wobei der erste Modularm, der zweite Modularm und ein Maschenkondensator derart in Reihe angeordnet sind, dass sich eine Masche bildet, wobei die erste und die zweite Induktivität jeweils außerhalb der Masche angeordnet sind, wobei zwischen den zwei ersten Modularmanschlüssen des ersten Modularms eine erste Anzahl von Submodulen in einer Reihenschaltung angeordnet ist und zwischen den zwei zweiten Modularmanschlüssen des zweiten Modularms eine zweite Anzahl von Submodulen in einer Reihenschaltung angeordnet ist, wobei die Submodule jeweils mindestens zwei Halbleiterschalter und mindestens einen Modulkondensator umfassen, wobei die Modularme eingerichtet sind, jeweils eine Spannung zu erzeugen, die einen Gleichspannungsanteil und einen Wechselspannungsanteil mit einer ersten Frequenz aufweist. Weiter wird diese Aufgabe durch ein Gleichspannungsnetz mit mindestens einem derartigen modularen Gleichspannungswandler und einer Gleichspannungsquelle gelöst, wobei der modulare Gleichspannungswandler eine elektrische Komponente mit der Spannungsquelle elektrisch verbindet, wobei die Gleichspannungsquelle und die elektrische Komponente unterschiedliche Betriebsspannungen aufweisen. Diese Aufgabe wird ferner durch ein Verfahren zum Betreiben eines derartigen modularen Gleichspannungswandlers oder eines derartigen Gleichspannungsnetzes gelöst, wobei der erste Modularm und der zweite Modularm jeweils eine Spannung mit einem Gleichspannungsanteil und einem Wechselspannungsanteil mit einer ersten Frequenz erzeugen, wobei sich der Gleichspannungsanteil und der Wechselspannungsanteil derart überlagern, dass der jeweilige Gleichspannungsanteil und der jeweilige Wechselspannungsanteil als Summe zwischen den Modularmanschlüssen des jeweiligen Modularms anliegen.

Weitere vorteilhafte Ausgestaltungen der Erfindung sind in den abhängigen Ansprüchen angegeben.

Der Erfindung liegt unter anderem die Erkenntnis zugrunde, dass sich ein Gleichspannungswandler durch zwei Modularme realisieren lässt, die jeweils eine Spannung erzeugen, die einen Gleichspannungsanteil und einen Wechselspannungsanteil aufweisen. Diese Spannungsanteile überlagern sich additiv, so dass zwischen den jeweiligen Modularmanschlüssen jeweils die Summe aus Gleichspannungsanteil und Wechselspannungsanteil mit einer ersten Frequenz anliegt. Darüber hinaus können noch weitere Spannungsanteile dem Gleichspannungsanteil und dem Wechselspannungsanteil überlagert werden. Die zwei Wechselspannungsanteile der zwei Modularme haben dabei die gleiche Frequenz. Mit dieser Frequenz wird Leistung zwischen diesen Modularmen und damit auch zwischen den beiden Gleichspannungsseiten ausgetauscht.

Zur Unterscheidung der unterschiedlichen Kondensatoren tragen diese den Namen Maschenkondensator für die Anordnung in der Masche und Modulkondensator für die Anordnung im Submodul. In einer vorteilhaften Ausgestaltung ist weiter unten auch noch ein Sperrkreiskondensator genannt. Diese Bezeichnung geben Aufschluss auf die Anordnung des Kondensators und beschreiben nicht den Aufbau oder die Ausgestaltung des entsprechenden Kondensators.

Zwischen den Gleichspannungsanschlüssen der jeweiligen Gleichspannungsseite fließt ein Gleichstrom. Dieser kann durch den Gleichspannungsanteil des jeweiligen Modularms gesteuert oder geregelt werden. Dabei steuert oder regelt der Gleichspannungsanteil des ersten Modularms den Gleichstrom an der ersten Gleichspannungsseite und der Gleichspannungsanteil des zweiten Modularms den Gleichstrom an der zweiten Gleichspannungsseite, indem über der ersten bzw. zweiten Induktivität ein entsprechender Gleichspannungsabfall erzeugt wird, mit dem der Gleichstrom gesteuert oder geregelt wird. Neben dem Gleichstrom kann auch alternativ oder ergänzend beispielsweise in einem überlagerten Regelkreis die Leistung an der jeweiligen Gleichspannungsseite oder die Gleichspannung geregelt werden. Bei der Verbindung zweier Teilnetze eines Gleichspannungsnetzes, wobei die Teilnetze unterschiedliche Betriebsspannungen aufweisen, kann es vorteilhaft sein, den Leistungsaustausch zwischen den beiden Teilnetzen zu steuern oder zu regeln. Falls es sich bei einem der Teilnetze um ein Inselnetz handelt, kann es auch vorteilhaft sein, die Spannung des Teilnetzes, das als Inselnetz ausgebildet ist, zu steuern oder zu regeln.

Dabei kann in einer einfachen Ausgestaltung das erste Teilnetz eine Gleichspannungsquelle umfassen und das zweite Teilnetz eine elektrische Komponente, wie beispielsweise einen elektrischen Verbraucher, umfassen. Durch den modularen Gleichspannungswandler ist es möglich, die elektrische Komponente mit dem ersten Teilnetz, insbesondere mit der Spannungsquelle des ersten Teilnetzes zu verbinden, auch wenn die Gleichspannungsquelle und die elektrische Komponente unterschiedliche Betriebsspannungen haben. Der modulare Gleichspannungswandler im Gleichspannungsnetz passt die unterschiedlichen Betriebsspannungen aneinander an, indem er Energie aus der Spannungsquelle mit einer veränderten Betriebsspannung an den elektrischen Verbraucher überträgt.

Der Wechselspannungsanteil dient dazu, elektrische Energie von der ersten Gleichspannungsseite zur zweiten Gleichspannungsseite zu übertragen und umgekehrt. Dabei verhindert die erste Induktivität, dass sich ein Wechselstrom zwischen den zwei ersten Gleichspannungsanschlüssen der ersten Gleichspannungsseite ausbildet. Durch die zweite Induktivität wird verhindert, dass sich ein Wechselstrom zwischen den zwei zweiten Gleichspannungsanschlüssen der zweiten Gleichspannungsseite ausbildet. Ebenso wird durch die erste Induktivität ein Wechselspannungsanteil an den ersten Gleichspannungsanschlüssen und durch die zweite Induktivität ein Wechselspannungsanteil an den zweiten Gleichspannungsanschlüssen vermieden oder zumindest hinreichend unterdrückt.

Der Energieaustausch von der ersten Gleichspannungsseite zur zweiten Gleichspannungsseite erfolgt dabei mittels der durch die Modularme erzeugten Wechselspannung und einem Wechselstrom in der Masche. Die durch die Modularme erzeugten Wechselspannungsanteile müssen für die Energieübertragung die gleiche Frequenz aufweisen. Diese Frequenz wird als erste Frequenz bezeichnet. Zur Verhinderung eines Gleichstroms zwischen der ersten Gleichspannungsseite und der zweiten Gleichspannungsseite ist in der Masche der Maschenkondensator vorgesehen. Dieser kann beispielsweise als unipolarer Kondensator ausgebildet sein. Diese Ausführung macht ihn besonders kostengünstig. Mittels der Wechselspannungsanteile der beiden Modularme kann eine Spannung über den Maschenkondensator angelegt werden, der einen Wechselstrom verursacht und damit eine Energieübertragung zwischen den Gleichspannungsseiten bewirkt. Um einen Wirkleistungsaustausch zu erzeugen ist es beispielsweise bei einem rein kapazitiven Verhalten der Masche vorteilhaft, wenn der Wechselspannungsanteil des ersten Modularms zum Wechselspannungsanteil des zweiten Modularms eine Phasenverschiebung, auch als Phasenversatz bezeichnet, aufweist.

Bei dem modularen Gleichspannungswandler kann für einen einfachen und kostengünstigen Aufbau ein erster Verbindungspunkt zwischen dem Maschenkondensator und dem ersten Modularm direkt oder über die erste Induktivität mit einem der zwei ersten Gleichspannungsanschlüsse verbunden sein. Ebenso kann ein zweiter Verbindungspunkt zwischen dem Maschenkondensator und dem zweiten Modularm direkt oder über die zweite Induktivität mit einem der zwei zweiten Gleichspannungsanschlüsse verbunden sein.

Besonders vorteilhaft ist der Einsatz des Gleichspannungswandlers oder mehrerer Gleichspannungswandler, also mindestens eines Gleichspannungswandlers in einem Gleichspannungsnetz. Der Gleichspannungswandler ermöglicht es, Komponenten mit unterschiedlicher Betriebsspannung im Gleichspannungsnetz zu verbinden. Dabei kann ein elektrischer Verbraucher oder Energiespeicher über einen Gleichspannungswandler mit dem Gleichspannungsnetz verbunden werden. Mit dem Gleichspannungswandler ist es darüber hinaus möglich, den Energieaustausch und die Leistung zwischen Teilen des Gleichspannungsnetzes zu steuern oder zu regeln.

In einer Ausgestaltung, bei der das Gleichspannungsnetz zwei Teilnetze mit unterschiedlicher Betriebsspannung aufweist, ergibt sich eine vorteilhafte Ausgestaltung, wenn der modulare Gleichspannungswandler mit den ersten zwei Gleichspannungsanschlüssen mit dem ersten der zwei Teilnetze verbunden ist und mit den zweiten zwei Gleichspannungsanschlüsse mit dem zweiten der zwei Teilnetze elektrisch verbunden ist. Damit ist ein Energieaustausch in beiden Richtungen zwischen den Teilnetzen möglich. Die Teilnetze können dabei unterschiedliche Betriebsspannungen aufweisen.

Allgemein eignet sich der modulare Gleichspannungswandler in einem Gleichspannungsnetz dazu, einen elektrischen Verbraucher, eine Energiequelle oder einen Energiespeicher mit einem Teilnetz des Gleichspannungsnetzes zu verbinden. Das Gleichspannungsnetz bzw. das Teilnetz kann dabei weitere Verbraucher, weitere Energiequellen und/oder Energiespeicher aufweisen. Der modulare Gleichspannungswandler kann dem elektrischen Verbraucher, der Energiequelle und/oder dem Energiespeicher die für dessen Betrieb erforderliche Spannung bereitstellen. Dazu kann die Spannung an der Gleichspannungsseite, an der der elektrische Verbraucher, die Energiequelle oder der Energiespeicher mit den Gleichspannungsanschlüssen der betreffenden Gleichspannungsseite verbunden ist, geregelt oder gesteuert werden. Alternativ ist es möglich, mittels des Gleichspannungswandlers die elektrische Leistung zwischen dem Teilnetz und dem elektrischen Verbraucher, der Energiequelle und/oder dem Energiespeicher zu steuern oder zu regeln.

Der modulare Gleichspannungswandler kann darüber hinaus eingesetzt werden, zwei DC-Netze mit beliebiger Spannungsebenen miteinander zu verbinden und einen bidirektionalen Leistungsaustausch zu ermöglichen. Die erste Gleichspannungsseite kann beispielsweise als Oberspannungsseite genutzt werden, während die zweiten Gleichspannungsanschlüsse die Unterspannungsseite des Gleichspannungswandlers darstellen.

Der Aufbau des Gleichspannungswandlers umfasst im Wesentlichen fünf funktionale Blöcke. Dazu zählen die erste Induktivität, die zweite Induktivität, der Maschenkondensator, der erste Modularm und der zweite Modularm. Die Modularme werden aufgrund ihrer Ausgestaltung mit einer Reihenschaltung von Submodulen auch als M2C-Arme bezeichnet. Die Modularme weisen mindestens ein Submodul auf. Die Submodule sind in einer Reihenschaltung zwischen den zwei Modularmanschlüssen angeordnet. Der Begriff der Reihenschaltung soll auch den Fall von einem Submodul umfassen, das mit seinen Anschlüssen dann mit den Modularmanschlüssen verbunden ist. Die Reihenschaltung kann eine beliebige Anzahl von Submodulen, also auch ein Submodul, aufweisen. Mit anderen Worten ist die Anzahl der Submodule größer oder gleich eins. Als Submodule eignen sich alle bekannten Ausführungsformen von Submodulen.

Eine erste Ausführung eines Submoduls weist zwei Halbleiterschalter und einen Modulkondensator auf. Damit kann an den Anschlüssen des Submoduls eine Spannung null oder die an dem Modulkondensator anliegende Spannung bereitgestellt werden. Ein Submodul mit vier Halbleiterschaltern erlaubt die Bereitstellung der Spannung null, der positiven Spannung des Modulkondensators und die negative Spannung des Modulkondensators an den Anschlüssen des Submoduls. Die Verwendung mehrerer Modulkondensatoren erlaubt die Bereitstellung unterschiedlicher Kondensatorspannungen an den Anschlüssen des Submoduls.

Die beispielhaft genannten Varianten des Submoduls werden auch als Halbbrückenmodul, Vollbrückenmodul und Doppelsubmodul bezeichnet.

Die beiden Modularme, also der erste Modularm und der zweite Modularm, modulieren vorgegebene Spannungssollwerte, die den Gleichspannungsanteil und den Wechselspannungsanteil aufweisen, und können vereinfacht als ideale Spannungsquellen angesehen werden.

Im stationären Zustand kann vom ersten Modularm beispielsweise die oberspannungsseitige DC-Spannung und vom zweiten Modularm die unterspannungsseitige DC-Spannung moduliert werden. Durch die Modulation einer zusätzlichen DC-Spannung, die zu einem Spannungsabfall über der ersten Induktivität bzw. der zweiten Induktivität führt, kann der jeweilige Gleichstrom auf der ersten Gleichspannungsseite bzw. auf der zweiten Gleichspannungsseite aktiv geregelt werden. Die Summe aus DC-Spannung und zusätzlicher DC-Spannung bildet den Gleichspannungsanteil, der von dem jeweiligen Modularm erzeugt wird.

Um den Energieaustausch zwischen den beiden Gleichspannungsseiten des Gleichspannungswandlers zu realisieren und auch das Energiegleichgewicht an den beiden Modularmen sicherzustellen, wird von den beiden Modularmen jeweils neben dem Gleichspannungsanteil bzw. den DC Spannungen ein Wechselspannungsanteil moduliert. Die Frequenz des Wechselspannungsanteils wird als erste Frequenz bezeichnet. Diese erste Frequenz ist für den Wechselspannungsanteil des ersten Modularms und den Wechselspannungsanteil des zweiten Modularms gleich. Durch die Wechselspannungsanteile fällt aufgrund unterschiedlicher Amplitude und/oder Phasenlange der Wechselspannungsanteile in der Masche eine zusätzliche AC Spannung über dem Maschenkondensator ab. Diese zusätzliche AC-Spannung mit erster Frequenz prägt einen Wechselstrom in die Masche ein. Die zusätzliche AC Spannung kann entweder von einem der beiden Modularmen erzeugt werden oder auf beide Modularme beliebig verteilt werden. Der Wechselspannungsanteil setzt sich somit aus einer für beide Modularme gleichen AC Spannung und dem Anteil zur Erzeugung der zusätzlichen AC-Spannung zusammen. Die von den Modularmen erzeugten AC-Spannungen sowie die zusätzliche AC Spannung bzw. zusätzlichen AC Spannungen haben dabei die gleiche Frequenz, die erste Frequenz. Die Summe aus AC Spannung und dem Anteil zur Erzeugung der zusätzlichen AC Spannung bildet den Wechselspannspannungsanteil der von dem jeweiligen Modularm erzeugt wird.

Die Frequenzwahl für die erste Frequenz kann beliebig erfolgen. Höhere Frequenzen führen zu erhöhten Schalt- und Leiterverlusten, verringern jedoch die Oberschwingungen insbesondere beim Energieaustausch in den Modulkondensatoren und den Induktivitäten und den Kondensatoren des Gleichspannungswandlers. Ebenfalls kann die Amplitude des Wechselspannungsanteils frei bzw. beliebig gewählt werden. Aufgrund des notwendigen Energiegleichgewichts führt eine hohe Spannung beim Wechselspannungsanteil zu einer geringeren Stromamplitude beim Wechselstrom und umgekehrt. Um die beiden Gleichspannungsseiten frei von AC-Spannungen und -Strömen zu halten, kommen die erste Induktivität für die erste Gleichspannungsseite und die zweite Induktivität für die zweite Gleichspannungsseite zum Einsatz. Der Maschenkondensator bildet in erster Näherung für den Wechselstrom einen Kurzschluss und sorgt dafür, dass der Wechselstrom sich in die Masche einprägen lässt und innerhalb der Masche zirkuliert. Am Maschenkondensator fällt die Differenz der an den ersten und zweiten Gleichspannungsanschlüssen anliegenden Spannung ab. Zur Unterdrückung des Wechselspannungsanteil und den damit einhergehenden Wechselströmen an den Gleichspannungsanschlüssen des Gleichspannungswandlers werden die erste bzw. zweite Induktivität eingesetzt. Die Dimensionierung dieser passiven Komponenten wie Maschenkondensator, erster und zweiter Induktivität, erfolgt in Abhängigkeit der gewählten ersten Frequenz. Es hat sich gezeigt, dass abhängig von dem Modulkondensator die zusätzliche AC Spannung, die der Erzeugung des Wechselstroms dient, klein ist im Vergleich zu der AC Spannung. So beträgt die Amplitude der zusätzlichen AC Spannung in vielen Anwendungen weniger als 10% der Amplitude der AC Spannung.

Zur Sicherstellung des Energiegleichgewichts im Gleichspannungswandler sind, abgesehen von elektrischen Verlusten, die an den Gleichspannungsseiten mittels Gleichspannung und Gleichstrom übertragenen elektrischen Leistungen gleich der innerhalb der Masche mittels Wechselstroms und Wechselspannung übertragenen Leistung. Dies bewirkt, dass die in den Modulkondensatoren gespeicherte Energie im Mittel gleichbleibt und die Modulkondensatoren sich im Mittel weder überladen noch entladen. Weiterhin wird deutlich, dass die Leistungen an den Gleichspannungsseiten gleich ist. Das bedeutet, die Leistung, die an der ersten Gleichspannungsseite in den Gleichspannungswandler hineinfließt, fließt an der zweiten Gleichspannungsseite des Gleichspannungswandlers, abgesehen von elektrischen Verlusten des Gleichspannungswandlers hinaus. Aus diesem Grunde bietet sich an, beispielsweise die Regelung der mittels Wechselspannung und Wechselstroms übertragenen Leistung in Abhängigkeit von den Spannungen der Modulkondensatoren vorzunehmen.

Durch die ausgeglichene Leistungsbilanz kann ein Energietransfer zwischen den beiden Gleichspannungsseiten durchgeführt werden.

An den passiven Komponenten wie Induktivitäten und Kondensatoren findet kein Umsatz von Wirkleistung statt.

Die vorgeschlagene Schaltung für den Gleichspannungswandler bietet zahlreiche Möglichkeiten zur idealen Leistungsskalierung. Die freie Wahl der ersten Frequenz erlaubt eine optimale Ausnutzung der eingesetzten Komponenten. Durch die Möglichkeit zur freien Justierung des Wechselspannungsanteils und des Wechselstroms in der Masche ist es möglich, die Anzahl der zu installierenden Submodule in den Modularmen optimal an die Bedürfnisse der zu übertragenden Leistung anzupassen. Die Schaltung ist ebenfalls in der Lage, auftretende Kurzschlüsse an den Gleichspannungsanschlüssen einer der Gleichspannungsseiten oder an beiden Gleichspannungsseiten ohne Abschaltung des Gleichspannungswandlers zu beherrschen. Mit anderen Worten können diese Störungen auf einer oder beiden Gleichspannungsseiten durchfahren werden.

Bei einer vorteilhaften Ausgestaltung der Erfindung ist in der Masche eine dritte Induktivität angeordnet. Die dritte Induktivität bewirkt eine Glättung des Stroms in der Masche. Insbesondere der durch den Wechselspannungsanteil erzeugte Wechselstrom innerhalb der Masche wird geglättet. Dieser wird durch eine zusätzliche AC Spannung erzeugt, die über dem Maschenkondensator anliegt. Der Strom ergibt sich aus der Änderung der Spannungen über den Maschenkondensator. Gerade kleine, aber schnelle Änderungen wie sie bei der Pulsweitenmodulation auftreten, wenn die Submodule pulsweitenmoduliert angesteuert werden, erzeugen hohe Ströme. Diese lassen sich mit Hilfe der dritten Induktivität in der Masche glätten. Dadurch werden Sprünge im Wechselstrom erfolgreich vermieden. Zudem liegt die zusätzliche AC Spannung des Wechselspannungsanteils, bzw. die Differenz des Wechselspannungsanteils des ersten Modularms und des Wechselspannungsanteils des zweiten Modularms nicht mehr vollständig über dem Kondensator an, sondern teilt sich auf Maschenkondensator und dritter Induktivität auf. Auch dies führt zu einem geglätteten Verlauf des Wechselstroms und damit zu weniger elektrischen Verlusten im Gleichspannungswandler.

Falls die dritte Induktivität oder Teile der dritten Induktivität in einer Reihenschaltung mit dem ersten Modularm und/oder zweiten Modularm angeordnet ist, bewirkt die dritte Induktivität bzw. die entsprechenden Teile der dritten Induktivität auch eine Glättung des Gleichstroms an den Gleichspannungsanschlüssen des Gleichspannungswandlers. Darüber hinaus werden störende Effekte der Wechselspannung an den Gleichspannungsanschlüssen weiter reduziert und unterdrückt.

Bei einer weiteren vorteilhaften Ausgestaltung der Erfindung ist die erste Frequenz größer als eine Serienresonanzfrequenz, die sich aus dem Maschenkondensator und der dritten Induktivität ergibt. Die dritte Induktivität bildet mit dem Maschenkondensator einen Serienschwingkreis mit einer Serienresonanzfrequenz. Dieser Serienschwingkreis bildet sich unabhängig davon, wo die dritte Induktivität in der Masche angeordnet ist. Diese Serienschwingkreis bringt einen synergetischen Effekt mit sich. Zum einen verhindert der Maschenkondensator weiterhin einen Gleichstrom zwischen der ersten und der zweiten Gleichspanungsseite des Gleichspannungswandlers. Wird die erste Frequenz des Wechselspannungsanteils größer gewählt als die Serienresonanzfrequenz oder wird die Serienresonanzfrequenz durch entsprechende Dimensionierung der dritten Induktivität und des Maschenkondensators kleiner gewählt als die erste Frequenz, erhält die Impedanz der Masche für die erste Frequenz ein induktives Verhalten. Damit hängt der Wechselstrom vom Integral der über diesen Serienschwingkreis anliegenden Wechselspannung ab. Die über dem Serienschwingkreis anliegende Wechselspannung entspricht der zusätzlichen AC Spannung bzw. der Differenz des Wechselspannungsanteil des ersten Modularms und des Wechselspannungsanteils des zweiten Modularms. Durch das induktive Verhalten ergibt sich nicht nur eine stärke Glättung des Wechselstroms in der Masche. Der Wechselstrom ist darüber hinaus deutlich einfacher steuerbar und regelbar, da dieser vom Integral der oben genannten Differenz des Wechselspannungsanteil des ersten Modularms und des Wechselspannungsanteils des zweiten Modularms abhängt und nicht mehr von der Ableitung, wie es bei einem kapazitiven Verhalten der Fall wäre. Dies vereinfacht die Regelung und verhindert hohe Stromspitzen innerhalb des modularen Gleichspannungswandlers.

Bei einer weiteren vorteilhaften Ausgestaltung der Erfindung wird die dritte Induktivität zumindest teilweise durch eine erste Modularminduktivität im ersten Modularm und eine zweite Modularminduktivität im zweiten Modularm gebildet. Die dritte Induktivität muss nicht notwendigerweise durch ein einzelnes Bauteil wie eine Spule realisiert werden. Es besteht die Möglichkeit, die dritte Induktivität durch zwei, drei oder noch mehr Elemente mit induktivem Verhalten zu realisieren.

Ein Teil der dritten Induktivität, die in einer Reihenschaltung zum ersten Modularm angeordnet ist und die somit auch vom gleichen Strom durchflossen wird, der auch durch den ersten Modularm fließt, wird als erste Modularminduktivtät bezeichnet. Ein weiterer oder verbleibender Teil der dritten Induktivität, die in einer Reihenschaltung zum zweiten Modularm angeordnet ist und die somit auch vom gleichen Strom durchflossen wird, der auch durch den zweiten Modularm fließt, wird als zweite Modularminduktivtät bezeichnet.

Die erste Modularminduktivität und die zweite Modularminduktivität erzeugen mit dem Maschenkondensator den oben beschriebenen Serienschwingkreis mit den genannten Vorteilen. Darüber hinaus verbessern sie das Regelverhalten der Gleichströme und unterdrücken bzw. reduzieren die Auswirkungen des Wechselspannungsanteils der Modularme auf die jeweilige Gleichspannungsseite des Gleichspannungswandlers.

Bei einer weiteren vorteilhaften Ausgestaltung der Erfindung ist parallel zur ersten Induktivität oder zu einem Teil der ersten Induktivität ein erster Sperrkreiskondensator und/oder parallel zur zweiten Induktivität oder einem Teil der zweiten Induktivität ein zweiter Sperrkreiskondensator angeordnet. Um den störenden Einfluss des Wechselspannungsanteils und des damit einhergehenden Wechselstroms in der Masche auf die erste Gleichspannungsseite und/oder die zweite Gleichspannungsseite zu reduzieren, hat es sich als vorteilhaft erwiesen die erste Induktivität und/oder die zweite Induktivität derart mit einem Kondensator, der als Sperrkreiskondensator bezeichnet wird, in einer Parallelschaltung zu erweitern, dass ein Sperrkreis entsteht. Ein Sperrkreis weist für die Sperrkreisresonanzfrequenz idealerweise eine unendliche Impedanz auf. Mit Hilfe des Sperrkreises bzw. der Sperrkreise lassen sich die Auswirkungen der Wechselspannungsanteile des ersten Modularms und/oder des zweiten Modularms auf die Gleichspannungsseiten, insbesondere auf die Spannung, die zwischen den ersten Gleichspannungsanschlüssen und zwischen den zweiten Gleichspannungsanschlüssen anliegt, weiter verringern, teilweise sogar komplett eliminieren.

Dazu muss der erste Sperrkreiskondensator nicht notwendigerweise parallel zur gesamten ersten Induktivität parallelgeschaltet werden. Es ist auch ausreichend, nur einen Teil der ersten Induktivität parallel zum ersten Sperrkreiskondensator anzuordnen. Damit lässt sich ohne Änderung der Dimensionierung der Bauteile, insbesondere von Spule und Kondensator, die Sperrkreisresonanzfrequenz festlegen. Das gleiche gilt analog für die zweite Induktivität und den zweiten Sperrschichtkondensator.

Bei einer weiteren vorteilhaften Ausgestaltung der Erfindung ist parallel zur ersten Induktivität der erste Sperrkreiskondensator und parallel zur zweiten Induktivität der zweite Sperrkreiskondensator angeordnet ist, wobei eine erste Sperrkreisresonanzfrequenz, die sich aus der Parallelschaltung der ersten Induktivität und des ersten Sperrkreiskondensator ergibt, in der gleichen Größenordnung liegt, insbesondere identisch oder zumindest nahezu identisch ist, wie die zweite Sperrkreisresonanzfrequenz, die sich aus der Parallelschaltung der zweiten Induktivität und des zweiten Sperrkreiskondensators ergibt. Unter der gleichen Größenordnung wird verstanden, dass die Größen, die in der gleichen Größenordnung liegen, sich maximal um den Faktor 10 unterscheiden. Unter nahezu identisch ist gemeint, dass zwei nahezu identische Größen sich um maximal 1% unterscheiden. Die Aufgabe der ersten Induktivität und des ersten Sperrkreiskondensators sowie der zweiten und der Induktivität und des zweiten Sperrkreiskondensators ist es, die Auswirkungen des Wechselspannungsanteils auf die Gleichspannungsseiten zu reduzieren oder zu eliminieren. Da der Wechselspannungsanteil beider Modularme die gleiche Frequenz, die erste Frequenz aufweist, ist es vorteilhaft, die erste Induktivität, die zweite Induktivität, den ersten Sperrkreiskondensator und den zweiten Sperrkreiskondensator derart zu bemessen oder zu dimensionieren, dass die erste Sperrkreisresonanzfrequenz und die zweite Sperrkreisresonanzfrequenz in der gleichen Größenordnung liegen, nahezu identisch sind oder identisch sind. Dabei hat es sich zur Unterdrückung der oben genannten Auswirkungen als besonders vorteilhaft erwiesen, für die erste Sperrkreisresonanzfrequenz und die zweite Sperrkreisresonanzfrequenz die erste Frequenz vorzusehen. Dann sind die erste Sperrkreisresonanzfrequenz und die zweite Sperrkreisresonanzfrequenz identisch oder zumindest nahezu identisch mit der ersten Frequenz.

Bei einer weiteren vorteilhaften Ausgestaltung der Erfindung ist die Serienresonanzfrequenz kleiner als mindestens eine der Sperrkreisresonanzfrequenzen, insbesondere kleiner als die erste Sperrkreisresonanzfrequenz und kleiner als die zweite Sperrkreisresonanzfrequenz. Dies ist besonders vorteilhaft für einen modularen Gleichspannungswandler, wobei die erste Frequenz größer ist als die Serienresonanzfrequenz, die sich aus dem Maschenkondensator und der dritten Induktivität ergibt. Daraus ergibt sich eine besonders vorteilhafte Ausgestaltung, wenn für die erste Frequenz in der Masche ein induktives Verhalten vorgesehen ist, dass die Serienresonanzfrequenz kleiner ist als die erste Sperrkreisresonanzfrequenz. Entsprechend ist dann die Serienresonanzfrequenz auch kleiner als die zweite Sperrkreisresonanzfrequenz. Damit kann ein besonders gutes Regelungsverhalten und Steuerungsverhalten für den Gleichspannungswandler realisiert werden. Gleichzeitig werden die Auswirkungen der Wechselgrößen, insbesondere die Auswirkungen des Wechselspannungsanteil bzw. der Wechselspannungsanteile und des Wechselstroms in besonders hohem Maße von den Gleichspannungsanschlüssen der ersten und zweiten Gleichspannungsseite ferngehalten. An den Gleichspannungsanschlüssen der ersten und zweiten Gleichspannungsseite sind dann nur die gewünschten Gleichgrößen wie Gleichspannung und Gleichstrom vorhanden. Damit werden die mit dem Gleichspannungswandler verbundenen Komponenten nicht gestört. Gleichzeitig lassen sich durch einen derartigen Gleichspannungswandler eventuell vorhandene Anschlussbedingungen an Gleichspannungsnetze und/oder Verbraucher mühelos erfüllen.

Bei einer weiteren vorteilhaften Ausgestaltung der Erfindung ist die erste Anzahl von Submodulen größer als die zweite Anzahl von Submodulen. Der vorgeschlagene Aufbau des Gleichspannungswandlers lässt sich auf besonders einfache Weise Dimensionieren. Auf der Oberspannungsseite werden zum Aufbringen einer höheren Gleichspannung dann mehr Submodule benötigt als auf der Unterspannungsseite. Ein derartiger Aufbau ist besonders kostengünstig herstellbar.

Bei einer weiteren vorteilhaften Ausgestaltung der Erfindung weist der erste Modularm und/oder der zweite Modularm eine Parallelschaltung von in einer Reihenschaltung angeordneten Submodulen auf. Um eine besonders gute Leistungsskalierung zu erreichen, kann der erste Modularm und/oder der zweite Modularm eine Parallelschaltung von Submodulen oder von einer Reihenschaltung von Submodulen aufweisen. Dabei sind zwei oder mehr Reihenschaltungen von Submodulen in einer Parallelschaltung angeordnet. Für ein gutes Regel- oder Steuerverhalten hat es sich als vorteilhaft erwiesen, dass die Reihenschaltungen von Submodulen jeweils eine Induktivität aufweisen. Zur besseren Unterscheidbarkeit kann diese Induktivität als Modulinduktivität bezeichnet werden. Mit dieser Modulinduktivität lassen lässt sich die Aufteilung der Ströme auf die parallelen Reihenschaltungen auf einfache Art steuern oder regeln. Diese Induktivtäten sind dann gleichzeitig Teile der dritten Induktivität. Dadurch wird nicht nur eine einfache Steuerung der Stromaufteilung auf die parallelen Reihenschaltungen sichergestellt, sondern auch eine Verbesserung des Regelverhaltens für den Leistungsaustausch mittels Wechselspannungsanteil erreicht. Durch die Parallelschalschaltung lässt sich der modulare Gleichspannungswandler auf einfache Weise mit gleichen Bauteilen wie Submodulen in seiner Leistungsfähigkeit skalieren.

Bei einer weiteren vorteilhaften Ausgestaltung der Erfindung ist die Spannungshöhe des Wechselspannungsanteils, insbesondere die Amplitude der Wechselspannungsanteils mit der ersten Frequenz, kleiner als der Betrag der Spannung des Gleichspannungsanteils. Die Spannungshöhe ist dabei der maximale Betrag der Spannung, mit der der Wechselanteil um seinen Mittelwert schwingt. Bei einem Wechselanteil, bei dem nur eine Schwingung mit einer Frequenz vorliegt, ist dies die Amplitude der Schwingung. Ist diese Spannungshöhe bzw. die Amplitude des Wechselanteil geringer als der Gleichspannungsanteil, so liegt an dem Modularm nur eine Spannung mit einer Polarität an. In diesem Fall können für den Modularm Halbbrückenmodule mit einem Kondensator und zwei Halbleiterschaltern verwendet werden, die besonders kostengünstig und einfach in der Regelung und Steuerung sind.

Bei einer weiteren vorteilhaften Ausgestaltung der Erfindung wird zwischen dem Wechselspannungsanteil mit erster Frequenz des ersten Modularms und dem Wechselspannungsanteil mit erster Frequenz des zweiten Modularms eine Phasendifferenz in Abhängigkeit der von dem modularen Gleichspannungswandler zu übertragenden elektrische Leistung und/oder in Abhängigkeit von den Spannungen der Modulkondensatoren erzeugt. Wird die Phasendifferenz zwischen den Wechselspannungsanteilen des ersten Modularms und des zweiten Modularms als Stellgröße verwendet, so hat sich gezeigt, dass sich eine besonders dynamische Regelung des Gleichspannungswandlers erzielen lässt, da die Phasendifferenz einen direkten physikalischen Zusammenhang zum Wirkleitungsaustausch zwischen der ersten Gleichspannungsseite und der zweiten Gleichspannungsseite über den Wechselspannungsanteil und dem Wechselstrom hat.

Bei einer weiteren vorteilhaften Ausgestaltung der Erfindung wird die Spannungshöhe des Gleichspannungsanteils in Abhängigkeit der von dem Gleichspannungswandler zu übertragenden elektrische Leistung und/oder in Abhängigkeit von den Spannungen der Modulkondensatoren erzeugt. Die Spannungshöhe des Gleichspannungsanteils ist der Betrag des Gleichspannungsanteils. Mit dieser Regelung lässt sich in einer übergeordneten Leistungsregelung der Leistungsaustausch zwischen der ersten Gleichspannungsseite und der zweiten Gleichspannungsseite auf besonders einfache Weise mit wenig Aufwand kostengünstig steuern oder regeln. Dabei hat es sich als vorteilhaft erwiesen, den Gleichspannungsanteil nur einer der beiden Gleichspannungsseiten mittels dieses Verfahrens zu steuern oder zu regeln, während die andere Gleichspannungsseite die Spannung zwischen den beiden jeweiligen Gleichspannungsanschlüssen gesteuert oder geregelt wird.

Bei einer weiteren vorteilhaften Ausgestaltung der Erfindung wird die Spannungshöhe des Gleichspannungsanteils in Abhängigkeit von der Spannung zwischen den Gleichspannungsanschlüssen einer der Gleichspannungsseiten gesteuert oder geregelt. Für die Verbindung eines Verbrauchers mit einem Gleichspannungsnetz hat es sich als vorteilhaft erwiesen, die Spannung zwischen den Gleichspannungsanschlüssen der Gleichspannungsseite, an dem der Verbraucher angeschlossen ist, zu steuern oder zu regeln. In diesem Fall bekommt der Verbraucher die notwendige Betriebsspannung bereitgestellt und kann je nach Betriebsfall dem Gleichspannungsnetz elektrische Energie entnehmen oder bei Bedarf elektrische Energie in dieses Gleichspannungsnetz zurückspeisen.

Bei einer weiteren vorteilhaften Ausgestaltung der Erfindung wird die Spannungshöhe des Wechselspannungsanteils, insbesondere die Amplitude der Wechselspannungsanteils mit der ersten Frequenz, und die Phasendifferenz zwischen dem Wechselspannungsanteil des ersten Modularms und dem Wechselspannungsanteil des zweiten Modularms derart erzeugt, dass eine erste elektrische Leistung aus dem Wechselspannungsanteil einer zweiten elektrischen Leistung aus dem Gleichspannungsanteil entspricht. Die Leistungen aus dem Wechselspannungsanteil und die Leistung aus dem Gleichspannungsanteil unterscheiden sich nur um die elektrischen Verluste. Dabei ist mit der Leistung aus dem Wechselspannungsanteil die Wirkleistung gemeint, die sich aus dem Wechselspannungsanteil der Spannung und dem Wechselspannungsanteil des Stroms durch den jeweiligen Modularm ergibt. Mit der Leistung aus dem Gleichspannungsanteil ist die Wirkleistung gemeint, die sich aus dem Gleichspannungsanteil der Spannung und dem Gleichspannungsanteil des Stroms durch den jeweiligen Modularm ergibt. Auf diese besonders einfache Weise lässt sich über längere Zeit, d.h. über mindestens 10 Periodendauern der ersten Frequenz, ein stabiles Verhalten des modularen Gleichspannungswandlers erreichen.

Im Folgenden wird die Erfindung anhand der in den Figuren dargestellten Ausführungsbeispiele näher beschrieben und erläutert. Es zeigen:
- FIG 1 bis FIG 4: Ausführungsbeispiele für einen modularen Gleichspannungswandler,
- FIG 5: ein Gleichspannungsnetz und
- FIG 6 bis FIG 8: Ausführungsbeispiele für ein Submodul.

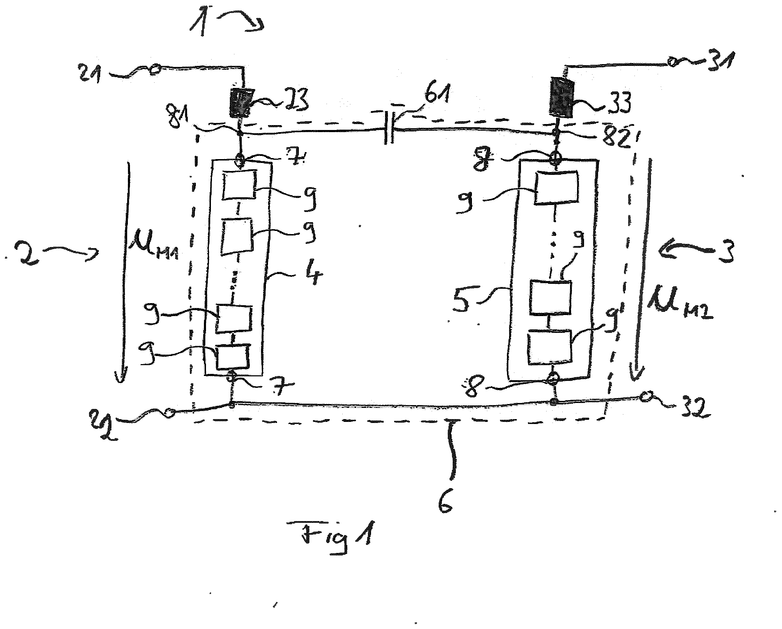

Die FIG 1 zeigt einen modularen Gleichspannungswandler 1. Dieser weist eine erste Gleichspannungsseite 2 mit zwei ersten Gleichspannungsanschlüssen 21, 22 und eine zweite Gleichspannungsseite 3 mit zwei zweiten Gleichspannungsanschlüssen 31, 32 auf. Zwischen den zwei ersten Gleichspannungsanschlüssen 21, 22 ist ein erster Modularm 4 und eine erste Induktivität 23 angeordnet. Ferner ist zwischen den zwei zweiten Gleichspannungsanschlüssen 31, 32 ein zweiter Modularm 5 und eine zweite Induktivität 33 angeordnet. Dabei weist der erste Modularm 4 zwei erste Modularmanschlüsse 7 und der zweite Modularm 5 zwei zweite Modularmanschlüsse 8 auf. Zwischen den Modularmanschlüssen 7, 8 ist jeweils eine Reihenschaltung von Submodulen 9 angeordnet. Die Anzahl der Submodule 9 kann sich für beide Modularme 4, 5 unterscheiden. Die Gleichspannungsseite 2, 3 mit der höheren Betriebsspannung weist dabei vorzugsweise in dem betreffenden Modularme 4, 5 eine höhere Anzahl von in Reihe angeordneten Submodulen auf. Wenn also die Betriebsspannung der ersten Gleichspannungsseite 2 größer ist als die Betriebsspannung der zweiten Gleichspannungsseite 3, dann ist vorzugsweise die Anzahl der in einer Reihenschaltung angeordneten Submodule 9 des ersten Modularms 4 größer als die Anzahl der in einer Reihenschaltung angeordneten Submodule 9 des zweiten Modularms 5.

Dabei ist, wie dargestellt, die erste Induktivität 23 direkt mit einem ersten Gleichspannungsanschluss 21 der zwei ersten Gleichspannungsanschlüsse 21, 22 verbunden. Alternativ ist die erste Induktivität 23 direkt mit einem zweiten Gleichspannungsanschluss 22 der zwei ersten Gleichspannungsanschlüsse 21, 22 verbunden. Ebenso ist, wie dargestellt, die zweite Induktivität 33 direkt mit einem ersten Gleichspannungsanschluss 31 der zwei zweiten Gleichspannungsanschlüsse 31, 32 verbunden. Alternativ ist die zweite Induktivität 33 direkt mit einem zweiten Gleichspannungsanschluss 32 der zwei zweiten Gleichspannungsanschlüsse 31, 32 verbunden.

Die Modularmanschlüsse 7, 8 der beiden Modularme 4, 5 sind jeweils derart über mindestens einen Maschenkondensator 61 miteinander verbunden, dass sich eine Masche 6 ergibt. Der erste Verbindungspunkt 81 stellt einen Punkt der Masche 6 zwischen dem Maschenkondensator 61 und dem ersten Modularm 4 dar. Der zweite Verbindungspunkt 82 stellt einen Punkt der Masche 6 zwischen dem Maschenkondensator 61 und dem zweiten Modularm 5 dar. Die jeweiligen Verbindungspunkte 81, 82 sind jeweils direkt oder über die erste bzw. zweite Induktivität 23, 33 mit dem ersten Anschluss 21, 31 der ersten Gleichspannungsanschlüsse 21, 22 bzw. zweiten Gleichspannungsanschlüsse 31, 32 verbunden.

Über der Reihenschaltung der Submodule 9 des ersten Modularms 4 wird die Spannung u_{M1} erzeugt, die sich aus der Summe von einem Gleichspannungsanteil und mindestens einem Wechselspannungsanteil zusammensetzt. Über der Reihenschaltung der Submodule 9 des zweiten Modularms 5 wird die Spannung u_{M2} erzeugt, die sich aus der Summe von einem Gleichspannungsanteil und mindestens einem Wechselspannungsanteil zusammensetzt.

Die erste Induktivität 23 und die zweite Induktivität 33 sind außerhalb der Masche 6 angeordnet.

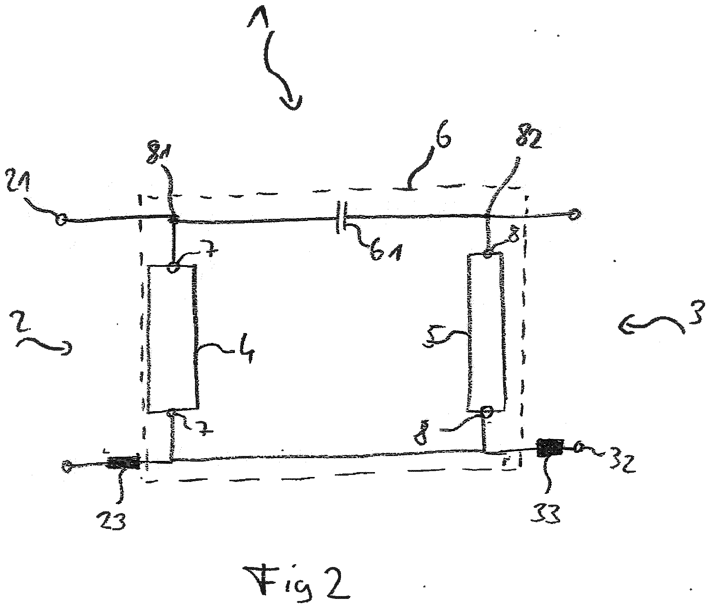

Die FIG 2 zeigt ein weiteres Ausführungsbeispiel des modularen Gleichspannungswandlers 1. Zur Vermeidung von Wiederholungen wird auf die Beschreibung zu der FIG 1 sowie auf die dort eingeführten Bezugszeichen verwiesen. Im Unterschied zum Ausführungsbeispiel der FIG 1 ist die erste Induktivität 23 nun mit einem zweiten Gleichspannungsanschluss 22 der zwei ersten Gleichspannungsanschlüsse 21, 22 verbunden. Der erste Verbindungspunkt 81 ist dann direkt mit dem ersten Gleichspannungsanschluss 21 der zwei ersten Gleichspannungsanschlüsse 21, 22 verbunden. Der zweite Verbindungspunkt 82 ist dann direkt mit dem ersten Gleichspannungsanschluss 31 der zwei zweiten Gleichspannungsanschlüsse 31, 32 verbunden. Ebenso ist es alternativ möglich, dass die erste Induktivität 23 sich aufteilt. Dabei ist ein Teil der ersten Induktivität 23 mit dem ersten Gleichspannungsanschluss 21 der zwei ersten Gleichspannungsanschlüsse 21, 22 und ein weiterer Teil der ersten Induktivität 23 mit dem zweiten Gleichspannungsanschluss 22 der zwei ersten Gleichspannungsanschlüsse 21, 22 verbunden. Analog ist es alternativ möglich, dass die zweite Induktivität 33 sich aufteilt. Dabei ist ein Teil der zweiten Induktivität 33 mit dem ersten Gleichspannungsanschluss 31 der zwei zweiten Gleichspannungsanschlüsse 31, 32 und ein weiterer Teil der zweiter Induktivität 33 mit dem zweiten Gleichspannungsanschluss 32 der zwei zweiten Gleichspannungsanschlüsse 31, 32 verbunden. Dies stellt dann eine Kombination der Ausführungsbeispiele der Figuren 1 und 2 dar.

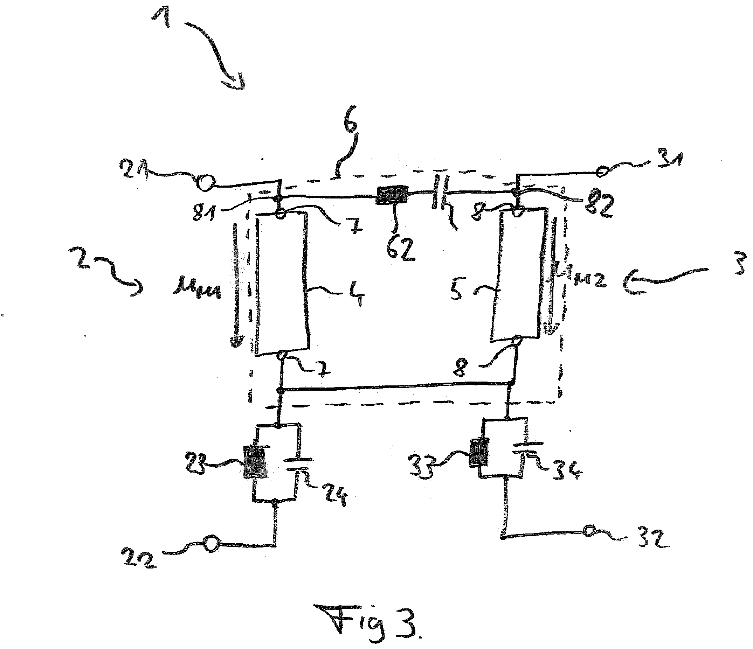

Die FIG 3 zeigt ein weiteres Ausführungsbeispiel des modularen Gleichspannungswandlers 1. Ausgehend von einem der Ausführungsbeispiele der Figuren 1 oder 2 wird eine dritte Induktivität 62 in der Masche 6 angeordnet. Zur Vermeidung von Wiederholungen wird auf die Beschreibung zu den Figuren 1 und 2, sowie auf die dort eingeführten Bezugszeichen verwiesen. Die dritte Induktivität 62 kann beispielsweise, wie dargestellt, einer Reihenschaltung mit dem Maschenkondensator 61 bilden. Alternativ ist eine Anordnung der dritten Induktivität 62 auch an jedem anderen Punkt in der Mache 6 möglich. Die dritte Induktivität 62 bildet zusammen mit dem Maschenkondensator einen Serienresonanzkreis in der Masche 6.

Die dritte Induktivität wird vorzugsweise so ausgelegt, dass sich für den Wechselspannungsanteil mit der ersten Frequenz ein induktives Verhalten des Serienresonanzkreises ergibt. Damit lässt sich der Wechselstrom in der Masche 6 besonders vorteilhaft steuern oder regeln. Gleichzeitig wird die Ausbildung eines Gleichstroms zwischen den beiden Gleichspannungsseiten 2, 3 zuverlässig vermieden.

Parallel zu der ersten Induktivität 23 ist ein erster Sperrkreiskondensator 24 angeordnet. Ebenso ist parallel zu der zweiten Induktivität 33 ein zweiter Sperrkreiskondensator 34 angeordnet. Diese bilden jeweils Sperrkreise, die eine Ausbildung eines Wechselstroms, insbesondere hervorgerufen durch den Wechselspannungsanteil der Modularme an den Gleichspannungsanschlüssen 21, 22, 31, 32 zuverlässig verhindert oder zumindest hinreichend unterdrückt.

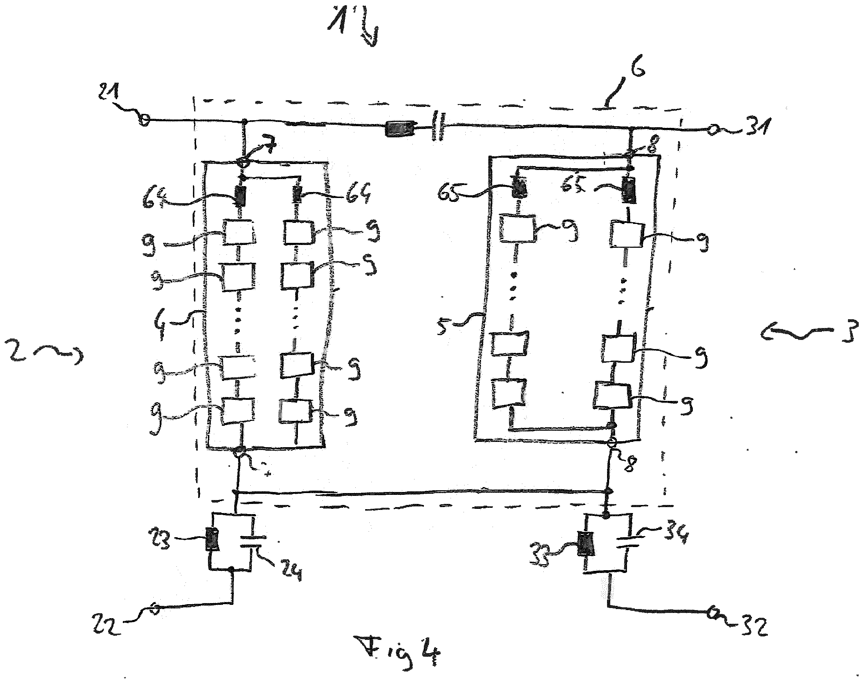

Die FIG 4 zeigt ein weiteres Ausführungsbeispiel des modularen Gleichspannungswandlers 1. Ausgehend von einem der Ausführungsbeispiele der Figuren 1 bis 3 werden die Meine dritte Induktivität 62 in der Masche 6 angeordnet. Zur Vermeidung von Wiederholungen wird auf die Beschreibung zu den Figuren 1 bis 3, sowie auf die dort eingeführten Bezugszeichen verwiesen. Die Modularme 4, 5 weisen in diesem Ausführungsbeispiel jeweils eine Parallelschaltung von in einer Reihenschaltung angeordneten Submodulen 9 auf. Zur besseren Steuer- oder Regelbarkeit der Stromaufteilung auf die parallelen Zweige weisen die Reihenschaltungen jeweils eine Modularminduktivität 64, 65 auf. Dabei werden die Induktivtäten im ersten Modularm 4 als erste Modularminduktivitäten 64 und die Induktivtäten im zweiten Modularm 5 als zweite Modularminduktivitäten 65 bezeichnet.

Alternativ zu dem dargestellten Ausführungsbeispiel ist es auch möglich, dass nur einer der Modularme 4, 5 eine Parallelschaltung von in einer Reihenschaltung angeordneten Submodulen 9 aufweist. Wenn die zweite Gleichspannungsseite 3 eine geringere Betriebsspannung hat als die erste Gleichspannungsseite 2, ist es aufgrund der höheren Ströme an den zweiten Gleichspannungsanschlüssen 31, 32 im Vergleich zu den ersten Gleichspannungsanschlüssen 21, 22 vorteilhaft, wenn nur der zweite Modularm 5 einer Parallelschaltung von in einer Reihenschaltung angeordneten Submodule 9 aufweist.

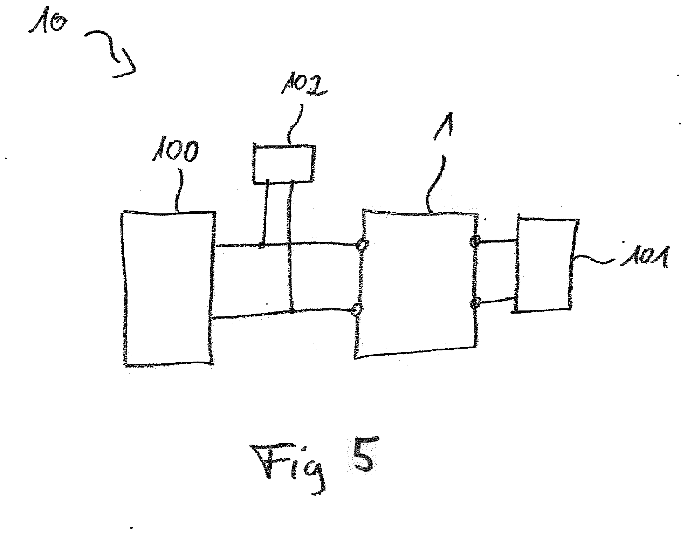

Die FIG 5 zeigt ein Ausführungsbeispiel eines Gleichspannungsnetz 10 mit einem modularen Gleichspannungswandler 1. Dieser kann beispielsweise nach einem der Figuren 1 bis 4 ausgebildet sein.

In dem Gleichspannungsnetz 10 wird eine elektrische Komponente 101 über den modularen Gleichspannungswandler 1 mit einer Gleichspannungsquelle 100 des Gleichspannungsnetzes verbunden. Dies kann beispielsweise dann geschehen, wenn sich die Betriebsspannungen der Gleichspannungsquelle 100 und der elektrischen Komponente 101 unterscheiden. Ebenso ist eine derartige Anordnung sinnvoll, wenn der Energieaustausch zwischen Gleichspannungsquelle 100 und elektrischer Komponente 101 bei gleicher oder unterschiedlicher Betriebsspannung gesteuert oder geregelt werden soll. Die Steuerung oder Regelung kann durch den modularen Gleichspannungswandler 1 realisiert werden. Das Gleichspannungsnetz kann dabei eine Vielzahl von elektrischen Komponenten aufweisen, die über einen modularen Gleichspannungswandler 1 aus einer Gleichspannungsquelle 100 mit elektrischer Energie versorgt werden. Dabei kann jede elektrische Komponente über einen separaten modularen Gleichspannungswandler 1 mit der Gleichspannungsquelle 100 verbunden sein. Alternativ ist es auch möglich, mehrere elektrische Komponenten 101 mit einem modularen Gleichspannungswandler 1 zu verbinden.

Neben den genannten elektrischen Komponenten 101, die über einen modularen Gleichspannungswandler 1 mit der Gleichspannungsquelle 100 des Gleichspannungsnetzes 10 verbunden sind, kann das Gleichspannungsnetz weitere elektrische Komponenten 102 aufweisen, die direkt, also ohne den modularen Gleichspannungswandler 1 mit der Spannungsquelle 100 verbunden sind.

Bei der elektrischen Komponente 101 und/oder weiteren elektrischen Komponente 102 kann es sich auch um Teilnetz handeln, die eine Vielzahl von elektrischen Quellen und Verbrauchern aufweisen.

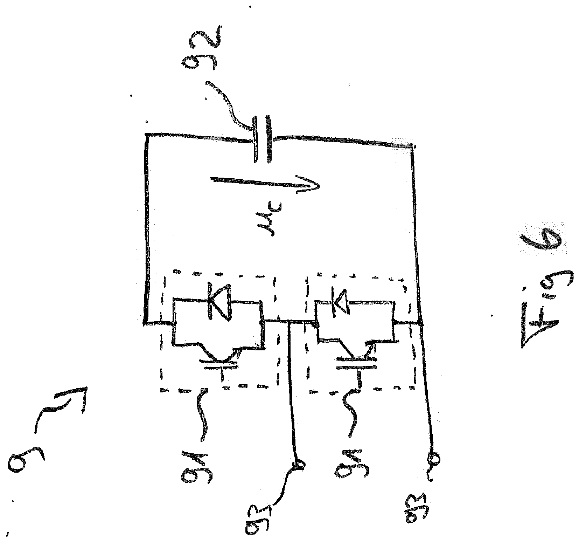

Die FIG 6 zeigt ein erstes Ausführungsbeispiel eines Submoduls 9. Das Submodul 9, auch als Halbbrückenmodul bezeichnet, weist zwei Halbleiterschalter 91 und einen Kondensator 92 auf. Zwischen den Anschlüssen 93 des Submoduls 9 kann mittels Schalthandlungen der Halbleiterschalter 91 die Spannung null oder die Kondensatorspannung u_{C} angelegt werden.

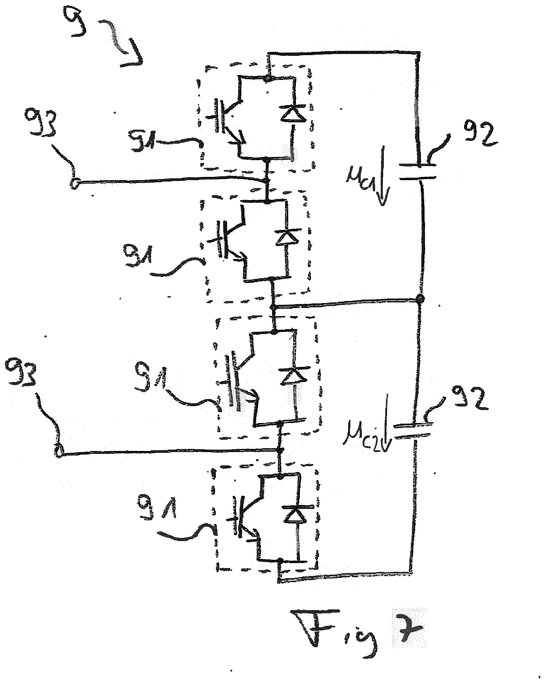

Die FIG 7 zeigt ein weiteres Ausführungsbeispiel eines Submoduls 9. Das Submodul 9, auch als Doppelhalbbrückenmodul bezeichnet, weist vier Halbleiterschalter 91 und zwei Kondensator 92 auf. Zwischen den Anschlüssen 93 des Submoduls 9 kann mittels Schalthandlungen der Halbleiterschalter 91 die Spannung null oder die Spannung eines oder beider Kondensatoren 92 angelegt werden.

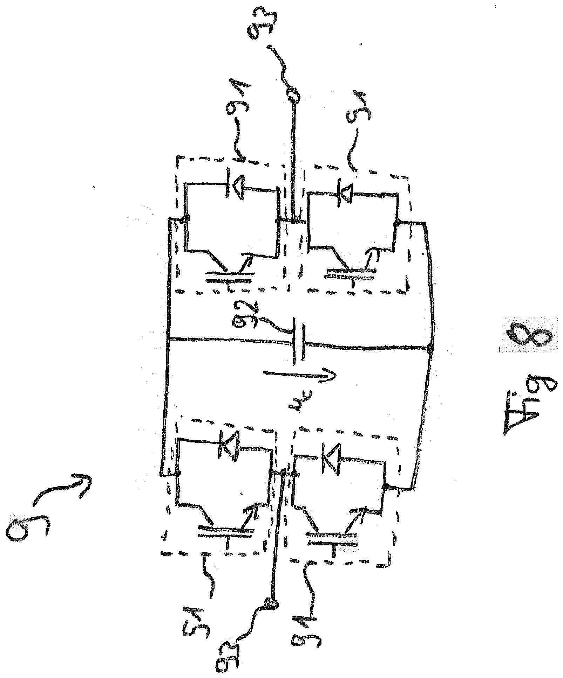

Die FIG 8 zeigt ein weiteres Ausführungsbeispiel eines Submoduls 9. Das Submodul 9, auch als Vollbrückenmodul bezeichnet, weist vier Halbleiterschalter 91 und einen Kondensator 92 auf. Zwischen den Anschlüssen 93 des Submoduls 9 kann mittels Schalthandlungen der Halbleiterschalter 91 die Spannung null oder die positive oder negative Spannung u_{C} des Kondensatoren 92 angelegt werden.

Es sei angemerkt, dass sich die Ausführungsbeispiele und die genannten Vorteile insbesondere zur Erreichung von spezifizierten Anforderungen beliebig miteinander kombinieren lassen.

Zusammenfassend betrifft die Erfindung einen modularen Gleichspannungswandler 1 aufweisend eine erste Gleichspannungsseite 2 mit zwei ersten Gleichspannungsanschlüssen 21, 22, eine zweite Gleichspannungsseite 3 mit zwei zweiten Gleichspannungsanschlüssen 31, 32, einen ersten Modularm 4 mit zwei ersten Modularmanschlüssen 7 und einen zweiten Modularm 5 mit zwei zweiten Modularmanschlüssen 8. Dabei sind zwischen den zwei ersten Gleichspannungsanschlüssen 21, 22 der erste Modularm 4 und eine erste Induktivität 23 in Reihe angeordnet, wobei zwischen den zwei zweiten Gleichspannungsanschlüssen 31, 32 der zweite Modularm 5 und eine zweite Induktivität 33 in Reihe angeordnet sind, wobei der erste Modularm 4, der zweite Modularm 5 und ein Maschenkondensator 61 derart in Reihe angeordnet sind, dass sich eine Masche 6 bildet, wobei die Modularme 4, 5 eingerichtet sind, jeweils eine Spannung u_{M1}, u_{M2} zu erzeugen, die einen Gleichspannungsanteil und einen Wechselspannungsanteil mit einer ersten Frequenz f₁ aufweist. Die Erfindung betrifft ferner ein Gleichspannungsnetz 10 mit einem derartigen Gleichspannungswandler 1. Weiter betrifft die Erfindung ein Verfahren zum Betreiben eines derartigen modularen Gleichspannungswandlers 1 oder eines derartigen Gleichspannungsnetzes 10.

## Patentansprüche

1. Modularer Gleichspannungswandler (1) aufweisend
- eine erste Gleichspannungsseite (2) mit zwei ersten Gleichspannungsanschlüssen (21,22),
- eine zweite Gleichspannungsseite (3) mit zwei zweiten Gleichspannungsanschlüssen (31,32),
- einen ersten Modularm (4) mit zwei ersten Modularmanschlüssen (7) und
- einen zweiten Modularm (5) mit zwei zweiten Modularmanschlüssen (8),
wobei zwischen den zwei ersten Gleichspannungsanschlüssen (21,22) der erste Modularm (4) und eine erste Induktivität (23) in Reihe angeordnet sind, wobei zwischen den zwei zweiten Gleichspannungsanschlüssen (31,32) der zweite Modularm (5) und eine zweite Induktivität (33) in Reihe angeordnet sind, wobei der erste Modularm (4), der zweite Modularm (5) und ein Maschenkondensator (61) derart in Reihe angeordnet sind, dass sich eine Masche (6) bildet, wobei die erste Induktivität (23) und die zweite Induktivität (33) jeweils außerhalb der Masche (6) angeordnet sind, wobei zwischen den zwei ersten Modularmanschlüssen (7) des ersten Modularms (4) eine erste Anzahl von Submodulen (9) in einer Reihenschaltung angeordnet ist und zwischen den zwei zweiten Modularmanschlüssen (8) des zweiten Modularms (5) eine zweite Anzahl von Submodulen (9) in einer Reihenschaltung angeordnet ist, wobei die Submodule (9) jeweils mindestens zwei Halbleiterschalter (91) und mindestens einen Modulkondensator (92) umfassen, wobei die Modularme (4,5) eingerichtet sind, jeweils eine Spannung (u_{M1}, u_{M2}) zu erzeugen, die einen Gleichspannungsanteil und einen Wechselspannungsanteil mit einer ersten Frequenz (f₁) aufweist.

2. Modularer Gleichspannungswandler (1) nach Anspruch 1, wobei in der Masche (6) eine dritte Induktivität (62) angeordnet ist.

3. Modularer Gleichspannungswandler (1) nach Anspruch 2, wobei die erste Frequenz (f₁) größer ist als eine Serienresonanzfrequenz (f_{SaK}), die sich aus dem Maschenkondensator (61) und der dritten Induktivität (62) ergibt.

4. Modularer Gleichspannungswandler (1) nach Anspruch 2 oder 3, wobei die dritte Induktivität (62) zumindest teilweise durch eine erste Modularminduktivität (64) im ersten Modularm (4) und eine zweite Modularminduktivität (65) im zweiten Modularm (5) gebildet wird.

5. Modularer Gleichspannungswandler (1) nach einem der Ansprüche 1 bis 4, wobei parallel zur ersten Induktivität (23) oder zu einem Teil der ersten Induktivität (23) ein erster Sperrkreiskondensator (24) und/oder parallel zur zweiten Induktivität (33) oder einem Teil der zweiten Induktivität (33) ein zweiter Sperrkreiskondensator (34) angeordnet ist.

6. Modularer Gleichspannungswandler (1) nach Anspruch 5, wobei parallel zur ersten Induktivität (23) der erste Sperrkreiskondensator (24) und parallel zur zweiten Induktivität (33) der zweite Sperrkreiskondensator (34) angeordnet ist, wobei eine erste Sperrkreisresonanzfrequenz (f_{SpK,1}), die sich aus der Parallelschaltung der ersten Induktivität (23) und des ersten Sperrkreiskondensators (24) ergibt, in der gleichen Größenordnung liegt, insbesondere identisch oder zumindest nahezu identisch ist, wie eine zweite Sperrkreisresonanzfrequenz (f_{SpK,2}), die sich aus der Parallelschaltung der zweiten Induktivität (33) und des zweiten Sperrkreiskondensators (34) ergibt.

7. Modularer Gleichspannungswandler (1) nach einem der Ansprüche 5 oder 6, wobei die Serienresonanzfrequenz (f_{Sak}) kleiner ist als mindestens eine der ersten oder zweiten Sperrkreisresonanzfrequenz (f_{SpK,1}, f_{SpK,2}), insbesondere kleiner ist als die erste Sperrkreisresonanzfrequenz (f_{SpK,1}) und kleiner ist als die zweite Sperrkreisresonanzfrequenz (f_{SpK,2}).

8. Modularer Gleichspannungswandler (1) nach einem der Ansprüche 1 bis 7, wobei die erste Anzahl von Submodulen (9) größer ist als die zweite Anzahl von Submodulen (9).

9. Modularer Gleichspannungswandler (1) nach einem der Ansprüche 1 bis 8, wobei der erste Modularm (4) und/oder der zweite Modularm (5) eine Parallelschaltung von in einer Reihenschaltung angeordneten Submodulen (9) aufweist.

10. Gleichspannungsnetz (10) mit mindestens einem modularen Gleichspannungswandler (1) nach einem der Ansprüche 1 bis 9 und einer Gleichspannungsquelle (100), wobei der modulare Gleichspannungswandler (1) eine elektrische Komponente (101) mit der Spannungsquelle (100) elektrisch verbindet, wobei die Gleichspannungsquelle (100) und die elektrische Komponente (101) unterschiedliche Betriebsspannungen aufweisen.

11. Verfahren zum Betreiben eines modularen Gleichspannungswandlers (1) nach einem der Ansprüche 1 bis 9 oder eines Gleichspannungsnetzes (10) nach Anspruch 10, wobei der erste Modularm (4) und der zweite Modularm (5) jeweils eine Spannung (u_{M1}, u_{M2}) mit einem Gleichspannungsanteil und einem Wechselspannungsanteil mit einer ersten Frequenz (f₁) erzeugen, wobei sich der Gleichspannungsanteil und der Wechselspannungsanteil derart überlagern, dass der jeweilige Gleichspannungsanteil und der jeweilige Wechselspannungsanteil als Summe zwischen den Modularmanschlüssen (7,8) des jeweiligen Modularms (4,5) anliegen.

12. Verfahren nach Anspruch 11, wobei die Spannungshöhe des Wechselspannungsanteils, insbesondere die Amplitude der Wechselspannungsanteils mit der ersten Frequenz (f₁), kleiner ist als der Betrag der Spannung des Gleichspannungsanteils.

13. Verfahren nach einem der Ansprüche 11 oder 12, wobei zwischen dem Wechselspannungsanteil mit erster Frequenz (f₁) des ersten Modularms (4) und dem Wechselspannungsanteil mit erster Frequenz (f₁) des zweiten Modularms (5) eine Phasendifferenz in Abhängigkeit der von dem modularen Gleichspannungswandler (1) zu übertragenden elektrischen Leistung und/oder in Abhängigkeit von Spannungen (u_{C}) der Modulkondensatoren (92) erzeugt wird.

14. Verfahren nach einem der Ansprüche 11 bis 13, wobei die Spannungshöhe des Gleichspannungsanteils in Abhängigkeit der von dem modularen Gleichspannungswandler (1) zu übertragenden elektrischen Leistung und/oder in Abhängigkeit von den Spannungen (u_{C}) der Modulkondensatoren (92) erzeugt wird.

15. Verfahren nach einem der Ansprüche 11 bis 14, wobei die Spannungshöhe des Gleichspannungsanteils in Abhängigkeit von der Spannung zwischen den Gleichspannungsanschlüssen (21,22 bzw. 31,32) einer der Gleichspannungsseiten (2,3) gesteuert oder geregelt wird.

16. Verfahren nach einem der Ansprüche 11 bis 15, wobei die Spannungshöhe des Wechselspannungsanteils, insbesondere die Amplitude der Wechselspannungsanteils mit der ersten Frequenz (f₁), und die Phasendifferenz zwischen dem Wechselspannungsanteil des ersten Modularms (4) und dem Wechselspannungsanteil des zweiten Modularms (5) derart erzeugt werden, dass eine erste elektrische Leistung aus dem Wechselspannungsanteil einer zweiten elektrischen Leistung aus dem Gleichspannungsanteil entspricht.
